Europäisches Patentamt

European Patent Office

Office européen des brevets

(11) Publication number: **0 088 447**
**B1**

(12) **EUROPEAN PATENT SPECIFICATION**

(45) Date of publication of patent specification: **26.08.87**

(21) Application number: **83102315.5**

(22) Date of filing: **09.03.83**

(51) Int. Cl.⁴: **C 08 L 27/06,** C 08 K 5/54,
C 08 F 8/42

(54) Use of ethyl silicate as a crosslinker for hydroxylated polymers.

(30) Priority: **10.03.82 US 356783**

(43) Date of publication of application:
**14.09.83 Bulletin 83/37**

(45) Publication of the grant of the patent:
**26.08.87 Bulletin 87/35**

(84) Designated Contracting States:
**AT BE CH DE FR GB IT LI LU NL SE**

(56) References cited:
**US-A-2 432 113
US-A-2 456 251
US-A-3 285 864
US-A-4 092 465**

(73) Proprietor: **UNION CARBIDE CORPORATION**
**39 Old Ridgebury Road**
**Danbury Connecticut 06817 (US)**

(72) Inventor: **Mallon, Charles Bernard**
**290 Shelburne Place**
**Belle Mead New Jersey 08502 (US)**

(74) Representative: **Wuesthoff, Franz, Dr.-Ing. et al**
**Patentanwälte Wuesthoff -v. Pechmann-**
**Behrens-Goetz Schweigerstrasse 2**
**D-8000 München 90 (DE)**

EP 0 088 447 B1

Courier Press, Leamington Spa, England.

# 0 088 447

**Description**

Background of the invention

This invention pertains to improving the solvent resistance, flexibility and hardness of hydroxyl-containing polymers by means of alkyl silicates or hydrolyzates thereof.

Background art

The preparation of polyvinyl butyral/ethyl silicate condensation products is disclosed in US—A—2,432,113. The purpose here was to provide a silicate coating on a polarizing sheet of polyvinyl butyral by impregnating the sheet tetraethyl orthosilicate.

In US—A—2,456,251 a binder for binding mica flakes to each other was produced by incorporating a minor amount of ethyl silicate in a resinous binder material having as its a base one or more resins selected from the group consisting of polymerized vinyl acetate, partially hydrolyzed polymerized vinyl acetate, polymerized acrylic ester resins and polymerized styrene resins.

In US—A—2,487,063, a polarizing composite similar to that disclosed in US—A—2,432,113 was described comprising a stretched iodo-polyvinyl butyral silicate.

US—A—3,624,014 teaches the preparation of stable polymeric gels as reaction products of tetralkyl ortho-silicates and hydroxy terminated diene polymers.

It is an object of this invention to provide solvent resistant versions of presently existing polymers having numerous attributes but poor solvent resistance and a method for introducing flexibilty and hardness into low molecular weight resins, especially to presently used coating resins.

Disclosure of invention

It has been found that alkyl silicates or their hydrolyzates may be used to improve the solvent resistance, flexibility, hardness and other mechanical properties of certain hydroxyl-containing polymers by crosslinking them, i.e. to improve the properties of a hydrolyzed polyvinyl chloride/vinyl acetate, a vinyl chloride/vinyl acetate/hydroxyalkyl acrylate terpolymer and a thermoplastic polyhydroxyether derived from bisphenol A and epichlorohydrin, which are prepared by first copolymerizing vinyl chloride with vinyl acetate in various proportions and then partially hydrolyzing the resultant copolymer to afford thermoplastic polyhydroxyethers, described in US—A—3,356,646, hydroxylated acrylic copolymers and vinyl chloride/vinyl acetate/hydroxyalkyl acrylate terpolymers having relatively low molecular weights.

The ratio of the hydroxylated polymer to the alkyl silicate or alkyl silicate hydroxyzate being preferably in the range of 25:1 to 1:1.

Representative hydroxylated acrylic copolymers include those containing hydroxyethyl or hydroxypropyl acrylate or methacrylate copolymerized with one or more alkyl acrylate or methacrylate esters, and, optionally, acrylic or methacrylic acid.

Suitable vinyl chloride/vinyl acetate/hydroxyalkyl acrylates include those containing 10 to 80 weight percent vinyl acetate and 5 to 50 percent by weight of hydroxyalkyl acrylate. Preferred hydroxyalkyl acrylates are hydroxyethyl acrylate, hydroxypropyl acrylate, and hydroxybutyl acrylate. These low molecular weight polymers have inherent viscosities in the range of 0.05 to 1.0 when measured as a 0.2 gram sample in cyclohexanone at 30°C.

Although other alkyl silicates can be used in this invention, the preferred alkyl silicate is ethyl silicate in the form of the monomer tetraaethyl orthosilicate (TEOS) or its hydrolyzates. Alkoxyalkyl silicates can also be used if preferred. Alkyl silicates are produced by the reaction of silicon tetrachloride and alcohols or alkoxy alcohols, generally in a reactor equipped with a stirrer, condenser and vat scrubber. The hydrogen chloride by-product is removed by reflux which may be carried out at reduced or atmospheric pressure. Through this process, the most common products TEOS and Cellosolve (Trademark of Union Carbide Corporation for monoalkyl ethers of ethylene glycol) silicate are made.

Subsequently, these products may be hydrolyzed by the addition of water and an acid catalyst. The amount of water added determines the degree of hydrolysis in the final product. Commercially available products derived from ethanol include the unhydrolyzed TEOS, condensed Ethyl Silicate (about 7 percent hydrolysis), Ethyl Silicate 40 (40 percent hydrolysis containing 40 percent $SiO_2$), and ethyl silicate having an 80 to 85 percent hydrolysis level.

A trace of acid is necessary to catalyze the crosslinking reaction. The term "trace" is used herein to mean at least 0.01 weight percent based on the weight·of the hydroxyl-containing polymers. Thermoplastic polyhydroxyether resins are a family of amorphous, high molecular weight phenoxy resins derived from diphenols and epichlorohydrin. A commercially available polyhydroxyether is Phenoxy PKHH (Trade designation for a resin sold by Union Carbide Corporation derived from Bisphenol-A and epichlorohydrin having a degree of polymerization of about 100 and average molecular weight of at least 20,000).

The crosslinking of the hydroxylated polymers with the silicates involves simply the addition of an alkyl silicate or one of its hydrolyzates to a solution of the polymer in the presence of the small quantity of acid, followed by the removing of solvent and curing of the resultant product at elevated temperature. Since addition of acid to solutions of hydroxylated polymers and TEOS or ES-40 results in gelation, it is preferred to add the acid as the last component.

2

The invention is further described in the examples which follows. All parts and percentages are by weight unless otherwise specified.

Control A

A solution of a vinyl chloride/vinyl acetate/hydroxypropyl acrylate terpolymer (containing 20 percent hydroxypropyl acrylate and 10 percent of vinyl acetate by weight) at a concentration of 23% by weight in methyl ethyl ketone (MEK) was prepared for use as a reference sample. The solution was applied to a 101.305 mm Q panel and allowed to air dry for 30 minutes. Then the coated panel was baked for 20—30 minutes at 130°C. The resulting coating, approximately 25,4 μm thick, was tested for solvent resistance by the MEK double rub test and for flexibility by the falling dart direct impact test. The sample was rated at 10 MEK double rubs and 0.092 mkg direct impact.

Example 1

To 13g of the solution of hydroxylated vinyl resin prepared as above in Control A were added: tetraethyl orthosilicate (TEOS, 1 gram) and about 0.01 gram of sulfuric acid. The solution was coated on a Q Panel to provide a 25,4 μm dry film, air dried, and baked at 130°C for 20—30 minutes. Evaluation of the cured coating showed excellent solvent resistance (greater than 100 MEK double rubs) and excellent flexibility >0.92 mkg direct impact). These results demonstrate the dramatic improvement in properties resulting from crosslinking of the hydroxylated vinyl resin film with ethyl silicate.

Examples 2—4

Example 1 was repeated with the exception that the hydroxylated vinyl resin/TEOS ratios were 6, 1.5 and 3, respectively. Coatings prepared as in Example 1 from these solutions had excellent solvent resistance (all were greater than 100 MEK double rubs) and excellent flexibility (direct impact was >0.92, 0.90 and 0.92 mkg, respectively). This demonstrates that the hydroxylated vinyl resin/TESO ratio is not critical with regard to attainment of excellent properties. These data are delineated in Table I.
(Note that a ratio of 3/1 provides roughly 1 TEOS molecule for every —OH in the polymer).

Examples 5—8

These examples were prepared from combinations of a 23 percent solution of hydroxylated vinyl resin in MEK and a solution of 85 percent hydrolyzed ES-40 in isopropanol with a silica content of 20 percent. Examples 5, 6, 7 and 8 were composed of the following ratios of the hydroxylated vinyl resin/hydrolyzed ES-40 solutions: 90/10, 83/17, 67/33, 50/50. Coatings were prepared, cured and tested as in the Example 1 with the following results: MEK double rubs: all greater than 100; direct impact: >0.92, 0.90, 0.55 and 0.092 mkg. In addition, it should be noted that samples 6 and 7 exhibited a slight haze in the film, while Example 8 had a ribbed, opaque appearance. These results, summarized in Table II, indicate that hydrolyzed ethyl silicate can be used to crosslink hydroxylated vinyl resin but that as the quantity of crosslinking agent increases, some incompatibility becomes noticeable. This does not necessarily detract from the usefulness of the crosslinked films.

Control B

As a reference sample, a solution of Phenoxy PKHH in tetrahydrofuran (THF) was coated on to a steel panel, dried and baked as in Example 1. The evaluations for solvent resistance, impact and hardness gave these results: MEK double rubs: 9; direct impact: >0.92 mgk; pencil hardness: 3B.

Examples 9—11

These samples were prepared by addition of the following reagents to a 20 percent solution of Phenoxy PKHH (20 grams in THF): ethyl silicate (1 gram); ES-40 (0.7 grams); 80 percent hydrolyzed ES-40 with a silica content of 20 percent (1.4 grams). Sulfuric acid was added to each sample and the coatings prepared and cured as in Example 1. The properties were evaluated with the following results: MEK double rubs; all greater than 100; direct impact: all >0.92 mkg; pencil hardness: H, HB, HB. In addition, a slight haze was noticed in films from Examples 10 and 11 while Example 9 produced a clear film. These results, compared in Table III with those in control B, demonstrate that ethyl silicate and its hydrolyzates are effected crosslinkers for Phenoxy PKHH.

Control C

An hydroxylated acrylic polymer was prepared by addition of a solution containing ethyl acrylate (35 grams), methyl methacrylate (45 grams), hydroxypropyl methacrylate (20 grams), azobisisobutyronitrile (AIBN, 1 gram), t-dodecylmercaptan (0.5 grams) and MEK (100 grams) to a refluxing solution of AIBN (0.5 grams) in MEK (200 grams) over a 3 hour period. Heating was continued for an additional 2.5 hours to insure polymerization of most of the monomers. A coating from this solution was prepared for use as a reference sample and exhibited the following properties: MEK double rubs: 3; direct impact; 0.12 mkg; pencil hardness: H.

Example 12

3.2 grams ethyl silicate were added to 11 grams of the polymer solution prepared in Control C along with sulfuric acid. A coating was prepared from this solution as described in Example 1 and evaluated for solvent resistance, direct impact and hardness. The results were as follows: MEK double rubs: greater than 100; direct impact: 0.35 mkg; pencil hardness: 3 H. These results, when compared in Table IV with those of Control C, clearly show the beneficial effect of crosslinking this hydroxylated acrylic polymer with ethyl silicate.

TABLE I

| Components | Control A | Example 2 | Example 3 | Example 4 |
|---|---|---|---|---|
| Vinyl chloride polymer[a] | 3g | 3g | 3g | 3g |
| TEOS[1] | — | 1g | 0.5g | 2g |
| MEK | 10g | 10g | 10g | 10g |
| Acid[3] weight-% | — | 0.01 | 0.01 | 0.01 |
| Properties[2] MEK double rubs | 10 | 100+ | 100+ | 100+ |
| Direct impact mkg | 0.092 | 0.92+ | 0.92+ | 0.90 |
| Pencil hardness | F | F | F | HB |

[1] TEOS is tetraethyl orthosilicate
[2] Properties measured on 25.4 µm dry films on steel Q panels after baking 20—30 minutes at 130°C.
[3] Acids used were sulfuric or benzoic.
[a] Vinyl chloride/vinyl acetate/hydroxypropyl acrylate terpolymer containing 67% vinyl chloride; 10% vinyl acetate and 20% hydroxypropyl acrylate copolymerized therein.

TABLE II

| Components | Example 5 | Example 6 | Example 7 | Example 8 |
|---|---|---|---|---|
| Vinyl chloride polymer[a] | 1g | 1g | 1g | 1g |
| 80% Hydrolyzed ES-40, 20% SiO$_2$ content | 0.5g | 1g | 2g | 5g |
| MEK | 3.5g | 3.3g | 3.3g | 3.3g |
| Properties[1] MEK double rubs | 100+ | 100+ | 100+ | 100+ |
| Direct impact mkg | 0.92+ | 0.90+ | 0.55+ | 0.092 |
| Pencil hardness | B | HB | 2B | 2B |
| Appearance | Clear | Very slight haze | Slight haze | Ribbed, opaque |

[1] Properties measured on 25.4 µm dry films on steel Q panels after baking 20—30 minutes at 130°C.

4

TABLE III
Phenoxy PKHH crosslinked with ethyl silicate

| Components | Control B | Example 9 | Example 10 | Example 11 |
|---|---|---|---|---|
| Phenoxy PKHH | 4g | 4g | 4g | 4g |
| TEOS | None | 1g | — | — |
| ES-40 | None | — | 0.7g | — |
| 80% Hydrolyzed ES-40 (20% $SiO_2$) | None | — | — | 1.4g |
| THF | 16g | 16g | 16g | 16g |
| $H_2SO_4$ | None | 0.01g | 0.01g | 0.01g |
| Properties[1] MEK double rubs | 9 | 100+ | 100+ | 100+ |
| Direct impact mkg | 0.92+ | 0.92+ | 0.92+ | 0.92+ |
| Pencil hardness | 3B | H | HB | HB |
| Appearance | Clear | Clear | Hazy | Hazy |

[1] Properties measured on 25.4 μm dry films on steel Q panels after baking 20—30 minutes at 130°C.

TABLE IV
Acrylic polymer[1] crosslinked with ethyl silicate

| Component | Control C | Example 12 |
|---|---|---|
| Acrylic polymer | 11g | 11g |
| TEOS | — | 3.2g |
| MEK | 39g | 39g |
| $H_2SO_4$ | — | 0.02g |
| Properties[2] MEK double rubs | 3 | 100+ |
| Direct impact mkg | 0.12 | 0.35 |
| Pencil hardness | H | 3H |

[1] Acrylic polymer composition: MMA/EA/HPMA-45/35/20, prepared at 22% (Total Solids) in MEK using AIBN initiator and t-dodecyl mercaptan as chain transfer agent.
[2] Properties measured on 25.4 μm dry films on steel Q panels after baking 20—30 minutes at 130°C.

**Claims**

1. Method of enhancing the solvent resistance, flexibility and hardness of hydroxylated polymers in the form of a hydrolyzed polyvinyl chloride/vinyl acetate, a vinyl chloride/vinyl acetate/hydroxyalkyl acrylate terpolymer and a thermoplastic polyhydroxyether derived from bisphenol A and epichlorohydrin which comprises blending said hydroxylated polymers with an alkyl silicate or alkyl silicate hydrolyzate in the presence of at least 0,01 weight percent of an acid—based on the weight of the polymers—and thereafter curing the resultant mixture.

2. Method claimed in Claim 1 wherein the alkyl silicate is tetraethyl orthosilicate.

3. Method claimed in Claim 1 or 2 wherein the ratio of hydroxylated polymer to alkyl silicate is the range of 25:1 to 1:1.

4. Method claimed in Claim 1 to 3 wherein the alkyl silicate is ethyl silicate hydrolyzed to a degree of about 40 percent.

5. Method claimed in Claim 4 wherein the alkyl silicate is ethyl silicate hydrolyzed to a degree of about 80 percent.

**Patentansprüche**

1. Verfahren zur Verbesserung der Lösungsmittelbeständigkeit, Flexibilität und Härte von hydroxylierten Polymeren in Form eines hydrolysierten Polyvinylchlorid/vinylacetats, eines Vinylchlorid/vinylacetate/hydroxyalkylacrylat - Terpolymeren und eines thermoplastischen Polyhydroxyethers, abgeleitet von Bisphenol A und Epichlorhydrin, durch Mischen der hydroxylierten Polymeren mit einem Alkylsilicat oder Alkylsilicat-Hydrolysat in Gegenwart von zumindest 0,01 Gew.-% einer Säurebezogen auf das Gewicht der Polymeren—und Härten des Gemischs.

2. Verfahren nach Anspruch 1, wobei das Alkylsilicat Tetraethylorthosilicat ist.

3. Verfahren nach Anspruch 1 oder 2, wobei das Verhältnis von hydroxyliertem Polymeren zu Alkylsilicat 25:1 bis 1:1 beträgt.

4. Verfahren nach Anspruch 1 bis 3, worin das Alkylsilicat Ethylsilicat ist, welches bis etwa 40% hydrolysiert ist.

5. Verfahren nach Anspruch 4, worin das Alkylsilicat Ethylsilicat ist, welches bis zu etwa 80% hydrolysiert ist.

**Revendications**

1. Procédé pour améliorer la résistance aux solvants, la flexibilité et la dureté de polymères hydroxylés sous la forme d'un polymère chlorure de vinyle/acétate de vinyle hydrolysé, d'un terpolymère chlorure de vinyle/acétate de vinyle/acrylate d'hydroxyalkyle et d'un polyhydroxyéther thermoplastique dérivé du bisphénol A et de l'épichlorhydrine, qui comprend le mélange desdits polymères hydroxylés avec un silicate d'alkyle ou un hydrolysat de silicate d'alkyle ne présence d'un moins 0,01 % en poids d'un acide—sur la base du poids des polymères—, suivi de la réticulation du mélange résultant.

2. Procédé suivant la revendication 1, dans lequel le silicate d'alkyle est l'ortho-silicate de tétra-éthyle.

3. Procédé suivant la revendication 1 ou 2, dans lequel le rapport du polymère hydroxylé au silicate d'alkyle se situe dans l'intervalle de 25:1 à 1:1.

4. Procédé suivant les revendications 1 à 3, dans lequel le silicate d'alkyle est le silicate d'éthyle hydrolysé à un degré d'environ 40%.

5. Procédé suivant la revendication 4, dans lequel le silicate d'alkyle est le silicate d'éthyle hydrolysé à un degré d'environ 80%.